(19) Europäisches Patentamt
European Patent Office
Office européen des brevets

(11) Publication number: 0 104 659 B1

(12) EUROPEAN PATENT SPECIFICATION

(45) Date of publication of patent specification: 13.01.88

(51) Int. Cl.[4]: C 08 L 79/08, C 08 L 77/02, C 08 L 81/00

(21) Application number: 83109701.9

(22) Date of filing: 28.09.83

# (54) Blends of poly(etherimides) and polyamides.

(30) Priority: 29.09.82 US 426732

(43) Date of publication of application:
04.04.84 Bulletin 84/14

(45) Publication of the grant of the patent:
13.01.88 Bulletin 88/02

(84) Designated Contracting States:
AT BE CH DE FR GB IT LI LU NL SE

(56) References cited:
EP-A-0 033 011
DE-A-1 956 461
DE-A-2 225 790
FR-A-2 472 586
FR-A-2 474 515
GB-A-2 039 931
US-A-3 592 952

PATENT ABSTRACTS OF JAPAN, vol. 5, no. 180, 19 November 1981, page 852 C-79

(73) Proprietor: AMOCO CORPORATION
200 East Randolph Drive P.O. Box 5910-A
Chicago Illinois 60680 (US)

(72) Inventor: Robeson, Lloyd Mahlon
Road 1, Box 244
Whitehouse Station, NJ 08889 (US)
Inventor: Matzner, Markus
23 Marshall Drive
Edison, NJ 08817 (US)

(74) Representative: Barz, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is directed to a composition suitable for molding comprising a blend of a poly(etherimide) polymer and a crystalline polyamide polymer.

Poly(etherimide) polymers are high performance engineering polymers. These polymers have a high continuous-use temperature, flame retardance, low smoke evolution, creep resistance, and good electrical properties. These resins can be injection molded, extruded into profiles, sheets or films and blow molded. However, poly(etherimide) polymers are susceptible to premature failure in certain environments such as in chlorinated hydrocarbons.

Poly(etherimide) polymers are molded at temperatures of from about 399 to 438°C (750 to 820°F). These high molding temperatures tend to have a detrimental effect upon the properties of the polymer.

Thus, there is a desire to improve the chemical resistance of poly(etherimide) polymers to make them more useful in environments where they are susceptible to premature failure without essentially effecting their mechanical properties. Also, there is a desire to lower the molding temperature of the poly(etherimide) polymers by use of an additive which does not adversely affect their mechanical properties.

It has now been found that by adding a crystalline polyamide polymer to a poly(etherimide) polymer, the resulting blend, when molded, has improved chemical resistance in environments such as in chlorinated hydrocarbons. The mechanical properties of the poly(etherimide) polymer are not adversely affected by addition of the crystalline polyamide polymer. Also, the addition of a crystalline polyamide polymer to the poly(etherimide) polymer significantly lowers the molding temperature of the poly(etherimide) without essentially affecting its mechanical properties.

The composition of this invention comprises a blend of a poly(etherimide) polymer as defined hereinafter and a crystalline polyamide polymer.

In another embodiment of this invention, a reinforcing fiber and/or mineral filler may be added to the blend or block copolymer.

The poly(etherimide) polymers suitable for use in this invention are known in the art and are described in, for example, U.S. Patents 3,847,867, 3,838,097 and 4,107,147.

The poly(etherimide) polymers are of the following formula:

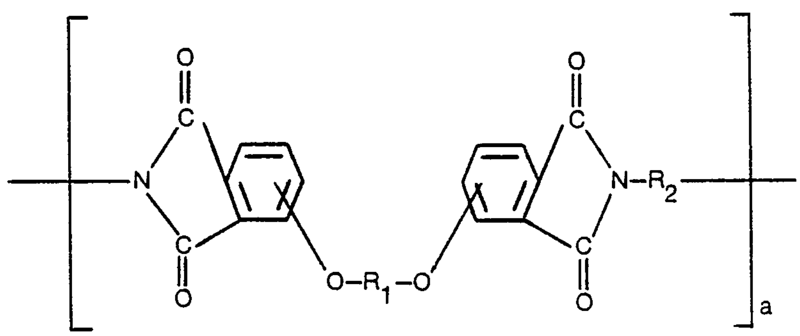

(I)

wherein a is an integer greater than 1, preferably from about 10 to about 10,000 or more —O—$R_1$—O— is attached to the 3 or 4 and 3′ or 4′ positions and $R_1$ is selected from (a) a substituted or unsubstituted aromatic radical of the formula:

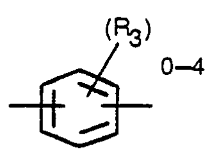

, or

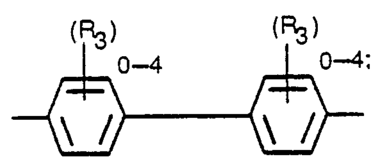

(b) a divalent radical of the formula:

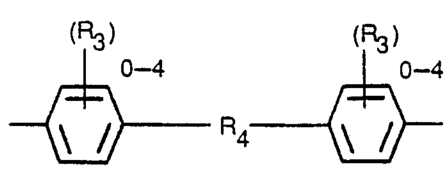

wherein $R_3$ is independently $C_1$ to $C_6$ alkyl, or halogen and $R_4$ is selected from —O—, —S—,

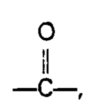

—SO—, —$SO_2$— alkylene of 1 to 6 carbon atoms, cycloalkylene of 4 to 8 carbon atoms, alkylidene of 1 to 6 carbon atoms or cycloalkylidene of 4 to 8 carbon atoms, $R_2$ is selected from an aromatic hydrocarbon radical having from 6—20 carbon atoms and halogenated derivatives thereof, or alkyl substituted derivatives thereof, wherein the alkyl group contains 1 to 6 carbon atoms, alkylene and cycloalkylene radicals having from 2 to 20 carbon atoms, $C_2$—$C_8$ alkylene terminated polydiorganosiloxane and a divalent radical of the formula

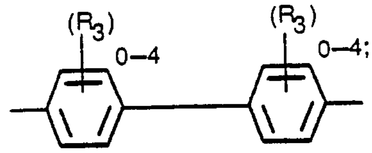

wherein $R_3$ are as previously defined.

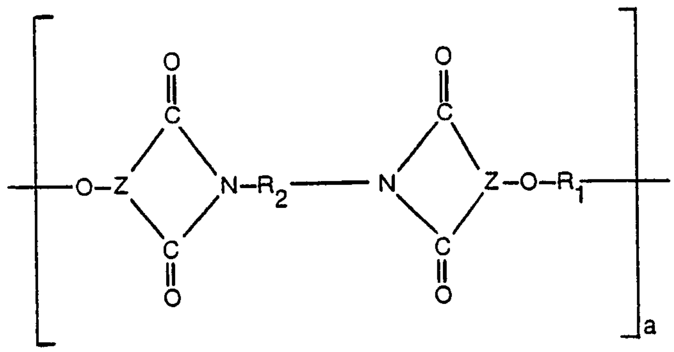
(II)

wherein —O—Z is a member selected from

(a) 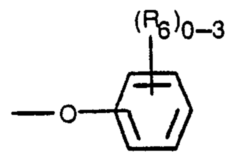

wherein $R_6$ is independently hydrogen, lower alkyl or lower alkoxy

(b) 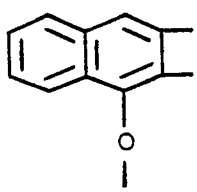 and (c) 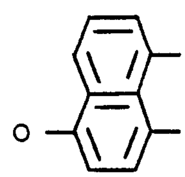

wherein $R_1$ and $R_2$ and a are as previously defined.

These polyetherimides are prepared by methods well known in the art as set forth in, for example, U.S. Patents 3,833,544, 3,887,588, 4,017,511, 3,965,125 and 4,024,110.

The polyetherimides of Formula (I) can, for example, be obtained by any of the methods well-known to those skilled in the art including the reaction of any aromatic bis(ether anhydride)s of the formula

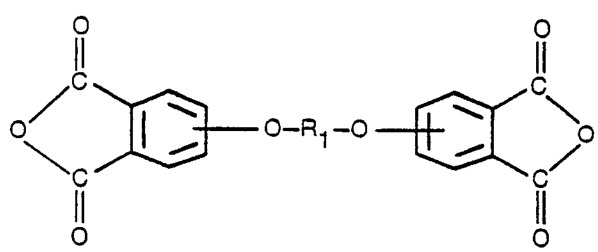
(III)

where $R_1$ is as defined hereinbefore, with a diamino compound of the formula

$$H_2N—R_2—NH_2 \quad (IV)$$

where $R_2$ is as defined hereinbefore. In general, the reactions can be advantageously carried out employing

well-known solvents, e.g., o-dichlorobenzene, m-cresol/toluene, N,N-dimethylacetamide, etc., in which to effect interaction between the dianhydrides and diamines, at temperatures of from about 20 to about 250°C. Alternatively, the polyetherimides can be prepared by melt polymerization of any dianhydride of Formula III with any diamino compound of Formula IV while heating the mixture of the ingredients at elevated temperatures with concurrent intermixing. Generally, melt polymerization temperatures between about 200 to 400°C and preferably 230 to 300°C can be employed. Any order of addition of chain stoppers ordinarily employed in melt polymerization can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mole percent) of diamine or dianhydride can be employed. The polyetherimides of Formula I have an intrinsic viscosity [η] greater than 0.2 deciliters per gram, preferably 0.35 to 0.60, or 0.7 deciliters per gram or even higher when measured in m-cresol at 25°C.

The aromatic bis(ether anhydride)s of Formula III include, for example,

2,2-bis[4-(2,3-dicarboxyphenoxy)phenyl]-propane dianhydride;
4,4'-bis(2,3-dicarboxyphenoxy)diphenyl ether dianhydride;
1,3-bis(2,3-dicarboxyphenoxy)benzene dianhydride;
4,4'-bis(2,3-dicarboxyphenoxy)diphenyl sulfide dianhydride;
1,4-bis(2,3-dicarboxyphenoxy)benzene dianhydride;
4,4'-bis(2,3-dicarboxyphenoxy)benzophenone dianhydride;
4,4'-bis(2,3-dicarboxyphenoxy)diphenyl sulfone dianhydride;
2,2-bis[4-(3,4-dicarboxyphenoxy)phenyl]-propane dianhydride;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy)benzene dianhydride;
1,4-bis(3,4-dicarboxyphenoxy)benzene dianhydride;
4,4'-bis(3,4-dicarboxyphenoxy)benzophenone dianhydride;
4(2,3-dicarboxyphenoxy)-4'-(3,4-dicarboxyphenoxy)diphenyl-2,2-propane dianhydride; etc. and mixtures of such dianhydrides.

The organic diamines of Formula IV include, for example, m-phenylenediamine, p-phenylenediamine, 4,4'-diaminodiphenylpropane, 4,4'-diaminodiphenylmethane, benzidine, 4,4'-diaminodiphenyl sulfide, 4,4'-diaminodiphenyl sulfone, 4,4'-diaminodiphenyl ether, 1,5-diaminonaphthalene, 3,3'-dimethylbenzidine and, 3,3'-dimethoxybenzidine.

The polyetherimides of formula (II) may, for example, be prepared by effecting reaction in the presence of a dipolar aprotic solvent of a mixture of ingredients comprising, for instance, (1) a bis(nitrophthalimide) of the general formula:

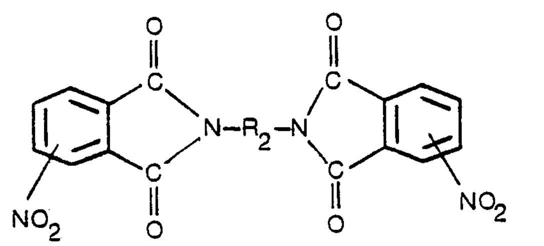

(V)

wherein $R_2$ is defined as hereinabove, and (2) an alkali metal salt of an organic compound of the general formula:

$$MO—R_1—OM \qquad (VI)$$

wherein M is an alkali metal and $R_1$ is defined as hereinabove.

The bis(nitrophthalimide) used in preparing the polymer is formed by reacting a diamine of the formula described above, $NH_2—R_2—NH_2$, with a nitro-substituted aromatic anhydride of the formula:

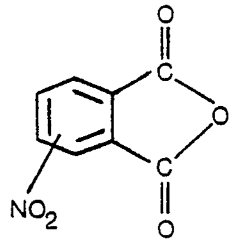

(VII)

The molar ratio of diamine to anhydride should ideally be about 1:2 respectively. The initial reaction

product is a bis(amide-acid) which is subsequently dehydrated to the corresponding bis(nitrophthalimide).

The diamines are described, *supra.*

The preferred nitrophthalic anhydrides useful herein are 3-nitrophthalic anhydride, 4-nitrophthalic anhydride, and mixtures thereof. These reactants are commercially available in reagent grade. They may also be prepared by the nitration of phthalic anhydride using procedures described in Organic Syntheses, Collective Vol. I, Wiley (1948), page 408. Certain other closely related nitroaromatic anhydrides may also be used in the reaction and are illustrated for example by 2-nitrophthalic anhydride, 1-nitro-2,3-naphthalenedicarboxylic acid anhydride and 3-methoxy-6-nitrophthalic anhydride.

With reference to the alkali metal salts of formula VI among the divalent carbocyclic aromatic radicals which $R_1$ may represent (mixtures of such radicals are also included) are, for instance, divalent aromatic hydrocarbon radicals of from 6 to 20 carbon atoms, such as phenylene, biphenylene, naphthylene, etc. Included are residues of, e.g. hydroquinone, resorcinol, chlorohydroquinone, etc. In addition, $R_1$ may be a residue of a dihydroxy diarylene compound in which the aryl nuclei are joined by either an aliphatic group, a sulfoxide group, sulfonyl group, sulfur, carbonyl group or oxygen. Typical of such diarylene compounds are the following:

2,4-dihydroxydiphenylmethane;
bis(2-hydroxyphenyl)methane;
2,2-bis(4-hydroxyphenyl)propane;
bis(4-hydroxyphenyl)methane;
bis(4-hydroxy-5-nitrophenyl)methane;
bis(4-hydroxy-2,6-dimethyl-3-methoxyphenyl)methane;
1,1-bis(4-hydroxyphenyl)ethane;
1,2-bis(4-hydroxyphenyl)ethane;
1,1-bis(4-hydroxy-2-chlorophenyl)ethane;
1,1-bis(2,5-dimethyl-4-hydroxyphenyl)ethane;
1,3-bis(3-methyl-4-hydroxyphenyl)propane;
2,2-bis(3-phenyl-4-hydroxyphenyl)propane;
2,2-bis(3-isopropyl-4-hydroxyphenyl)propane;
2,2-bis(4-hydroxynaphthyl)propane;
hydroquinone;
naphthalene diols;
bis(4-hydroxyphenyl)ether;
bis(4-hydroxyphenyl)sulfide and
bis(4-hydroxyphenyl)sulfone.

When dialkali metal salts of formula VI are used with the compound illustrated by formula V, the ingredients are advantageously present in an equal molar ratio for optimum molecular weight and properties of the polymer. Slight molar excesses, e.g., about 0.001 to 0.10 molar excess of either the dinitro-substituted organic compound or of the dialkali metal salt of formula VI may be employed. When the molar ratios are approximately equal, the polymer is substantially terminated by $Z—NO_2$ at one end and a phenolic group at the other end. If there is a molar excess of one compound, that particular terminal group will predominate.

The conditions of reaction whereby the alkali-metal salt of formula VI is reacted with the dinitro-substituted organic compound of formula V can be varied widely. Generally, temperatures of the order of about 25—150°C are advantageously employed, although it is possible to employ lower or higher temperature conditions depending on the ingredients used, the reaction product sought, time of reaction, solvent employed, etc. In addition to atmospheric pressure, superatmospheric pressures and subatmospheric pressures may be employed depending upon the other conditions of reaction, the ingredients used, the speed at which it is desired to effect reaction, etc.

The time of reaction also can be varied widely depending on the ingredients used, the temperature, the desired yield, etc. It has been found that times varying from about 5 minutes to as much as 30 to 40 hours are advantageously employed to obtain the maximum yield and desired molecular weight. Thereafter the reaction product can be treated in the appropriate manner required to effect precipitation and/or separation of the desired polymeric reaction product. Generally, common solvents such as alcohols (e.g. methanol, ethanol, isopropyl alcohol, etc.) and aliphatic hydrocarbons (e.g. pentane, hexane, octane, cyclohexane, etc.) may be employed as precipitants for this purpose.

It is important that the reaction between the dinitro-substituted organic compound of formula V and the alkali-metal salt of formula VI (mixtures of such alkali-metal salts can also be used) be carried out in the presence of a dipolar aprotic solvent.

The polymerization is performed under anhydrous conditions usually using dipolar aprotic solvents such as dimethylsulfoxide which are added in varying amounts depending upon the particular polymerization. A total quantity of solvent, dipolar aprotic solvent or mixture of such solvent with an aromatic solvent sufficient to give a final solution containing 10—20% by weight of polymer is preferably employed.

The preferred poly(etherimide) polymers include those having repeating units of the following formula:

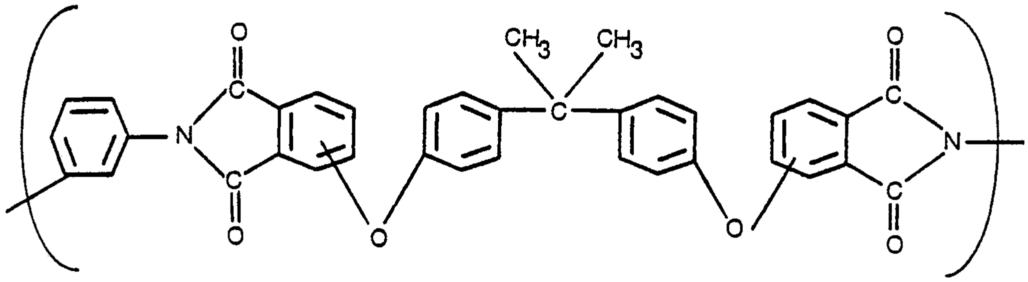

The crystalline polyamide polymers which may be used herein are well known in the art. The polyamide polymers include homopolymers as well as copolymers. These polymers may be formed by conventional methods from the condensation of bifunctional monomers, by the condensation of diamines and dibasic acids, as well as by addition polymerization. Numerous combinations of diacids, such as carbonic acid, oxalic acid, glutaric acid, adipic acid, pimelic acid, suberic acid, azelaic acid, sebacic acid, dodecanedioic acid, isophthalic acid, terephthalic acid, and the like, diamines, such as hydrazine, ethylenediamine, hexamethylenediamine, 1,8-octanediamine, piperazine, and the like, and amino acids are possible. The chains between functional groups in the reactants may comprise linear or branched aliphatic hydrocarbons, or alicyclic or aromatic rings. They may also contain hetero atoms such as oxygen, sulfur, and nitrogen. Secondary diamines lead to the formation of N-substituted polyamides.

Also, included herein are the aromatic polyamide polymers which are aromatic in both the diamine and the dibasic acid. The dibasic acids include terephthalic acid, isophthalic acid, phthalic acid, and the like. The aromatic diamines include o-phenylenediamine, 2,4-diaminotoluene, 4,4′-methylenedianiline, and the like.

The polyamide polymers are prepared by methods well known in the art, such as by direct amidation which is the reaction of amine groups with carboxyls accompanied by elimination of water; low temperature polycondensation of diamines and diacid chlorides, ring-opening polymerization, addition of amines to activated double bonds, polymerization of isocyanates and reaction of formaldehyde with dinitriles.

The polyamide polymers include polyhexamethylene-adipamide, i.e., nylon 6,6; poly(ε-caprolactam), i.e., nylon-6; polypropiolactam, i.e., nylon-3; poly(pyrrolidin-2-one, i.e., nylon-4; poly(ω-enanthamide), i.e., nylon-7; polycapryllactam, i.e., nylon-8; poly(ω-pelargonamide), i.e., nylon-9; poly(11-aminodecanoic acid), i.e., nylon-10; poly(ω-undecaneamide), i.e., nylon-11; polyhexamethyleneterephthalamide, i.e., nylon-6, T, nylon 6,10, and the like.

The reinforcing fibers which may be used herein include fiberglass, carbon fibers, aromatic polyamide fibers, and the like.

The mineral fillers which may be used include calcium carbonate, wollastonite, silicates and the like.

The blend of poly(etherimide) polymer and crystalline polyamide polymer may be alloyed with a variety of thermoplastic polymers such as aromatic polyesters, aromatic polycarbonates, poly(ester carbonates), poly(aryl ether)s, polyhydroxyether, polyarylates and the like.

Other additives may be included with the blend and include pigments; thermal stabilizers; ultraviolet light stabilizers, plasticizers, and the like.

The polyamide polymer is used in amounts of from about 95 to about 5, preferably from about 80 to about 20 weight percent. The poly(etherimide) polymer is used in amounts of from about 5 to about 95, preferably from about 20 to about 80 weight percent. The reinforcing fiber, or mineral filler or thermoplastic polymer, is used in amounts of from 0 to about 50, preferably from 0 to about 30 weight percent.

The composition of this invention is prepared by any conventional mixing method. For example, a preferred method comprises mixing the polyamide polymer, poly(etherimide) polymer and optionally, thermoplastic polymer, and/or reinforcing fiber, and/or mineral fiber in powder or granular form in an extruder and extruding the mixture into strands, chopping the strands into pellets and molding the pellets into the desired article.

## Examples

The following examples serve to give specific illustrations of the practice of this invention but they are not intended in any way to limit the scope of this invention. In these examples, all parts and percentages are on a weight basis unless otherwise specified.

Control A

Control A was a poly(etherimide) polymer having repeating units of the following formula:

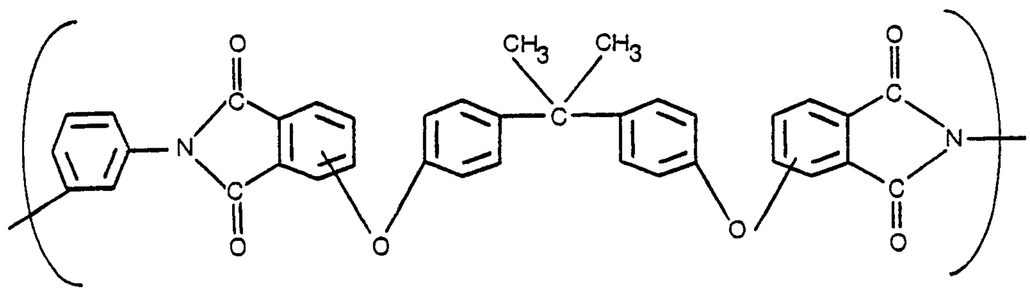

This poly(etherimide) polymer has a reduced viscosity of 0.51 as measured in chloroform (0.5 g. per 100 ml) at 25°C. The poly(etherimide) polymer was injection molded into ASTM test specimens in a 35.44 g (1 1/4 ounce) Newbury screw injection molding machine under the molding conditions shown in Table I. The test specimens were tested for the following properties: tensile strength and modulus according to ASTM D—638; elongation at break according to ASTM D—638; notched izod impact strength according to ASTM D—256; heat distortion temperature measured at 1.82 MPa (264 psi) on a 3.175 mm (1/8 inch) thick unannealed test bar according to ASTM D—635. The melt flow of the polymer was measured according to a procedure similar to ASTM D—1238. The results are shown in Table I. Also, test specimens (3.175 mm, 1/8 inch, wide and 0,635 mm, 25 mils, thick cast from a compression molded sample) were placed under the stress shown in Table II. A cotton swab saturated with the chemical environment, as identified in Table II, was attached to the center of the test specimen. The time for the specimen to rupture was then recorded. The results are shown in Table II.

Example 1

80 weight percent of the poly(etherimide) of Control A was blended with 20 weight percent of nylon 6,6 (Zytel® 101 obtained from E.I. Dupont De Nemours & Co.) having a melting point of 255°C (as measured by ASTM D—789), a specific gravity of 1.14 (as measured by ASTM D—792) and a flexural modulus of 2827 N/mm$^2$ (410,000 psi), dry 23°C (as measured by ASTM D—790) in a 2.54 cm (one inch) laboratory extruder having a 24 L/D at a temperature of 270 to 290°C. The resultant product was molded and tested as described in Control A.

The results are shown in Tables I and II.

Example 2

60 weight percent of the poly(etherimide) of Control A was blended with 40 weight percent of the nylon 6,6 of Example 1 by the procedure described in Example 1. The resultant product was molded and tested as described in Control A.

The results are shown in Tables I and II.

Example 3

60 weight percent of the poly(etherimide) of Control A was blended with 40 weight percent of nylon 12 (Grilamid® L25 Natural obtained from Emserwerke) having a melting range of 176 to 180°C (as measured by a polarization microscope), a specific gravity of 1.01 (as measured by ASTM D—792) and a flexural modulus of 1241 N/mm$^2$ (180,000 psi), dry, 23°C (as measured by ASTM D—790) by the procedure described in Example 1. The resultant product was molded and tested as described in Control A.

The results are shown in Tables I and II.

TABLE I

| Example | Control A | 1 | 2 | 3 |
|---|---|---|---|---|
| Description of the Composition | | | | |
| Polyetherimide (wt.%) | 100 | 80 | 60 | 60 |
| Nylon (wt.%) | — | 20 | 40 | 40 |
| Properties | | | | |
| Tensile Modulus (psi) | (462 000) | (475 000) | (409 000) | (344 000) |
| $N/mm^2$ | 3 185) | 3 275 | 2 820 | 2 372 |
| Tensile Strength (psi) | (15 200) | (12 800) | (11 000) | (9 010) |
| $N/mm^2$ | 104.8 | 88.3 | 75.8 | 62.1 |
| Elongation (percent) | 50 | 5.1 | 14.2 | 16.7 |
| Notched Izod Impact | (1.2) | (0.8) | (1.1) | (1.5) |
| Strength (ft-lbs/in of notch) cm $kg/cm^2$ | 5.16 | 3.44 | 4.73 | 6.45 |
| Heat Distortion Temperature | 195°C | 186°C | 145°C | 148°C |
| Melt Flow (dg/min) at 300°C and 303 kPa (44 psi) | No Flow | 4.5 | 43.9 | 6.5 |
| Molding Conditions | | | | |
| Cylinder Temperature | | | | |
| Rear °C(°F) | 377 (710) | 304 (580) | 288 (550) | 288 (550) |
| Mid °C(°F) | 371 (700) | 299 (570) | 282 (540) | 282 (540) |
| Nozzle °C(°F) | 366 (690) | 293 (560) | 277 (530) | 277 (530) |
| Screw (revolutions per minute) | 80 | 80 | 120 | 80 |
| Injection Pressure | (1 050) | (900) | (800) | (900) |
| (psi, gauge) kPa | 7341 | 6307 | 5617 | 6307 |
| Cycle Time (sec) | 52 | 52 | 52 | 52 |
| Mold Temperature (°C) | 140 | 140 | 80 | 90 |

TABLE II
Time to Rupture Results

| Chemical Environment | Stress $N/mm^2$ (psi) | Examples | | | |
|---|---|---|---|---|---|
| | | Control A[2] | 1 | 2 | 3 |
| Trichlorethylene | 6.9 (1000) | 2 seconds (R) | 0.29 hours (R) | 2 hours (NCNB) | 2 hours (NCNB) |
| 1,1,-trichloroethane | 27.6 (4000) | 0.35 hours (R) | 2.53 hours (R) | 6 hours (NCNB) | |
| | 34.5 (5000) | | | | 1.90 hours (R) |
| Skydrol® 500A | 27.6 (4000) | 0.3 hours (R) | | 4.14 hours (R) | |
| CELLOSOLVE Acetate | 13.8 (2000) | 0.091 hours (R) | 4 hours (NCNB) | 4 hours (NCNB) | 4 hours (NCNB) |
| Xylene | 20.7 (3000) | 0.056 hours (R) | 0.30 hours (R) | 4 hours (NCNB) | 4 hours (NCNB) |
| Toluene | 20.7 (3000) | 0.012 hours (R) | 0.14 hours (R) | 2 hours (NCNB) | 2 hours (NCNB) |
| 50/50 Toluene/Heptane | 34.5 (5000) | 0.19 hours R | 0.48 hours R | 2.73 hours R | 1.44 hours R |

[1]Skydrol® 500A = aircraft fuel
[2]R = ruptured
NCNB = not crazed, not ruptured

Control B

80 weight percent of the poly(etherimide) of Control A was blended with 20 weight percent of fiberglass 3.175 mm, (1/8 inch chopped strands, P1978—XI obtained from Owens-Corning Fiberglass Corp.) by the procedure described in Example 1. The resultant product was molded and tested as described in Control A.

The results are shown in Table III.

Control C

80 weight percent of the nylon 6,6 of Example 1 was blended with 20 weight percent of the fiberglass of Control B by the procedure described in Example 1. The resultant product was molded and tested as described in Control A.

The results are shown in Table III.

Example 4

48 weight percent of the poly(etherimide) of Control A was blended with 32 weight percent of the nylon 6,6 of Example 1 and 20 weight percent of the fiberglass of Control B. The resultant product was molded and tested as described in Control A.

The results are shown in Table III.

TABLE III

| Example | Control B | 3 | Control C |
|---|---|---|---|
| **Description of the Composition** | | | |
| Polyetherimide (wt.%) | 80 | 48 | — |
| Nylon (wt.%) | — | 32 | 80 |
| Fiberglass (wt.%) | 20 | 20 | 20 |
| **Properties** | | | |
| Flexural Modulus (psi)<br>N/mm$^2$ | (961 000)<br>6 626 | (879 000)<br>6 061 | (747 000)<br>5 151 |
| Flexural Strength (psi)<br>N/mm$^2$ | (219 700)<br>204.8 | (28 400)<br>195.8 | (26 700)<br>184.1 |
| Tensile Modulus (psi)<br>N/mm$^2$ | (978 000)<br>6 743 | (949 000)<br>6 543 | (866 000)<br>5 971 |
| Tensile Strength (psi)<br>N/mm$^2$ | (18 500)<br>127.6 | (18 000)<br>124.1 | (16 100)<br>111.0 |
| Elongation (percent) | 2.6 | 3.4 | 2.4 |
| Notched Izod Impact | (1.1) | (1.1) | (1.3) |
| Strength (ft-lbs/in of notch)<br>cm kg/cm$^2$ | 4.73 | 4.73 | 5.59 |
| Heat Distortion Temperature | 207°C | 212°C | 242°C |
| Melt Flow (dg/min)<br>at 300°C and 303 kPa (44 psi) | No Flow | 10.4 | |
| **Molding Conditions** | | | |
| Cylinder Temperature | | | |
| Rear °C(°F)<br>Mid °C(°F)<br>Nozzle °C(°F) | 377 (710)<br>371 (700)<br>366 (690) | 288 (550)<br>282 (540)<br>277 (530) | 282 (540)<br>277 (530)<br>271 (520) |
| Screw<br>(revolutions per minute) | 120 | 120 | 130 |
| Injection Pressure (psi, gauge)<br>kPa | (1 000)<br>6 996 | (1 000)<br>6 996 | (1 000)<br>6 996 |
| Cycle Time (sec) | 52 | 52 | 52 |
| Mold Temperature (°C) | 140 | 90 | 90 |

**Claims**

1. A composition suitable for molding, comprising a crystalline polyamide polymer and a poly(etherimide) polymer of the following formulae (I) or (II):

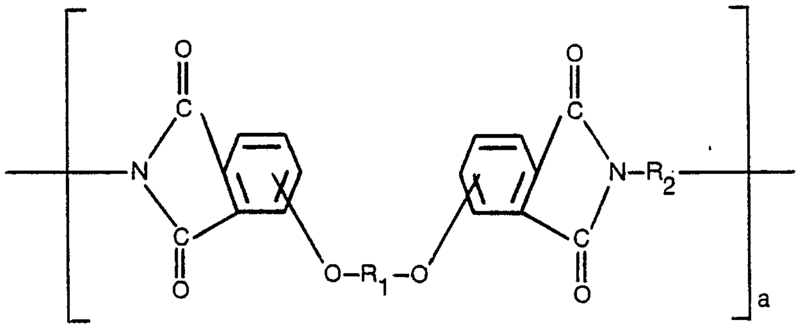

(I)

wherein a is an integer greater than 1, —O—$R_1$—O— is attached to the 3 or 4 and 3′ or 4′ positions and $R_1$ is selected from (a) a substituted or unsubstituted aromatic radical of the formula:

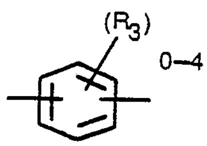

, or

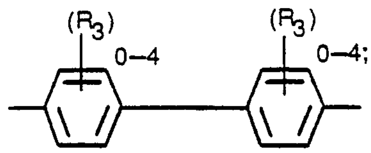

(b) a divalent radical of the formula:

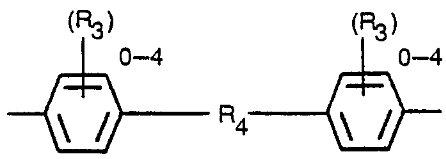

wherein $R_3$ is independently $C_1$ to $C_6$ alkyl, or halogen and $R_4$ is selected from —O—, —S—,

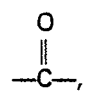

,

—SO—, —$SO_2$— alkylene of 1 to 6 carbon atoms, cycloalkylene of 4 to 8 carbon atoms, alkylidene of 1 to 6 carbon atoms or cycloalkylidene of 4 to 8 carbon atoms, $R_2$ is selected from an aromatic hydrocarbon radical having from 6—20 carbon atoms and halogenated derivatives thereof, or alkyl substituted derivatives thereof, wherein the alkyl group contains 1 to 6 carbon atoms, alkylene and cycloalkylene radicals having from 2 to 20 carbon atoms, $C_2$—$C_8$ alkylene terminated polydiorganosiloxane and a divalent radical of the formula

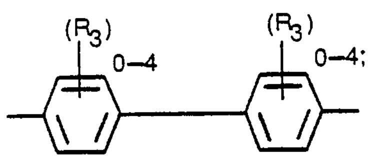

wherein $R_3$ are as previously defined;

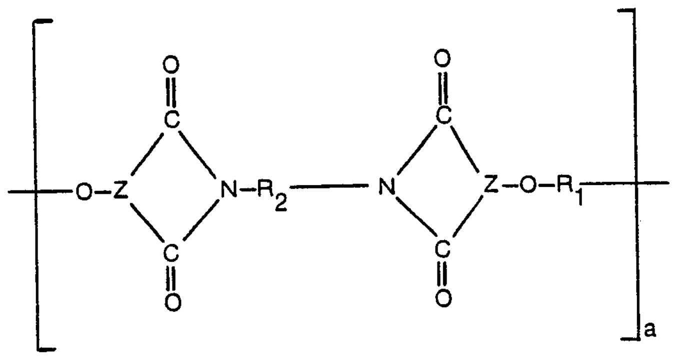

(II)

wherein —O—Z is a member selected from

(a) 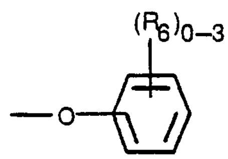

wherein $R_6$ is independently hydrogen, lower alkyl or lower alkoxy

(b) 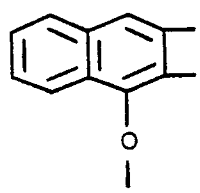 and (c) 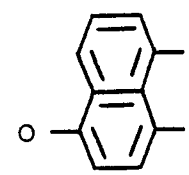

wherein $R_1$ and $R_2$ and a are as defined above.

2. A composition as defined in claim 1 wherein the poly(etherimide) has repeating units of the following formula:

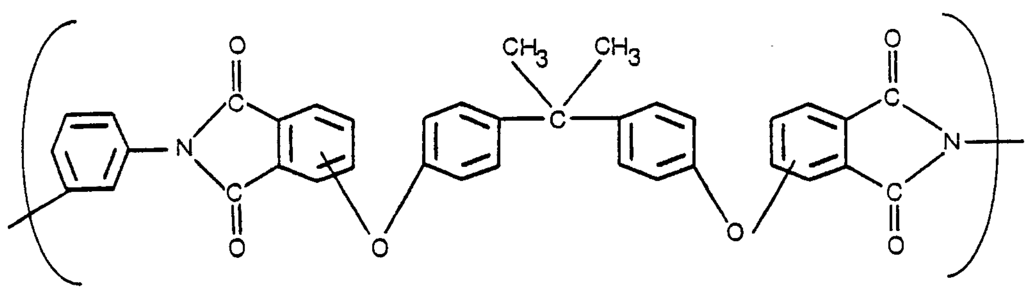

3. A composition as defined in claims 1 or 2 wherein the polyamide is selected from one or more of the following: nylon-6,6, nylon-6, nylon-3, nylon-4, nylon-7, nylon-8, nylon-9, nylon-10, nylon-11, nylon-6,T and nylon-6,10.

4. A composition as defined in any one of claims 1 to 3 wherein the crystalline polyamide polymer is used in amounts of from about 5 to about 95 weight percent.

5. A composition as defined in any one of claims 1 to 4 wherein the poly(etherimide) polymer is used in amounts of from about 5 to about 95 weight percent.

6. A composition as defined in any one of claims 1 to 5 which contains a reinforcing fiber such as carbon fibers, fiberglass and/or aromatic polyamide fibers.

7. A composition as defined in any one of claims 1 to 6 which contains a mineral filler such as calcium carbonate, wollastonite and/or silicates.

8. A composition as defined in any one of claims 1 to 7 which contains a thermoplastic polymer, e.g., a polycarbonate or a poly(ester carbonate).

**Patentansprüche**

1. Zum Formen geeignete Zusammensetzung, umfassend ein kristallines Polyamid-Polymer und ein Poly(etherimid)-Polymer der folgenden Formeln (I) oder (II):

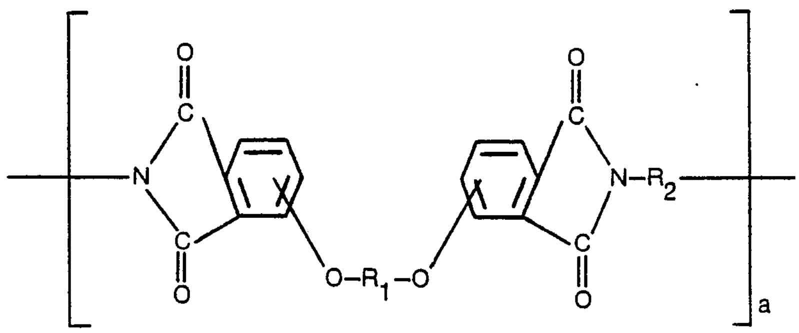

(I)

worin a eine ganze Zahl größer als 1 ist, —O—$R_1$—O— in den 3- oder 4- und 3'- oder 4'-Stellungen gebunden ist und $R_1$ ausgewählt ist unter (a) einem substituierten oder unsubstituierten aromatischen Rest der Formel:

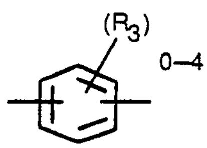

,

oder

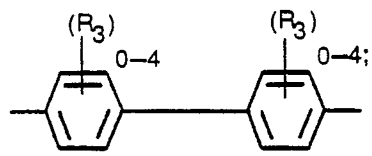

(b) einem zweiwertigen Rest der Formel:

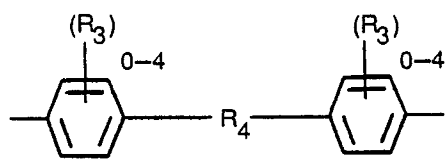

worin $R_3$ unabhängig $C_1$ bis $C_6$-Alkyl oder Halogen ist und $R_4$ ausgewählt ist under —O—, —S—,

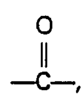

,

—SO—, —$SO_2$—, Alkylen mit 1 bis 6 Kohlenstoffatomen, Cycloalkylen mit 4 bis 8 Kohlenstoffatomen, Alkyliden mit 1 bis 6 Kohlenstoffatomen oder Cycloalkyliden mit 4 bis 8 Kohlenstoffatomen, $R_2$ ausgewählt ist unter einem aromatischen Kohlenwasserstoffrest mit 6 bis 20 Kohlenstoffatomen und halogenierten Derivaten davon oder Alkyl-substituierten Derivaten davon, worin die Alkylgruppe 1 bis 6 Kohlenstoffatome enthält, Alkylen- und Cycloalkylenresten mit 2 bis 20 Kohlenstoffatomen, Polydiorganosiloxan mit $C_2$—$C_8$-Alkylen-Endgruppen und einem zweiwertigen Rest der Formel

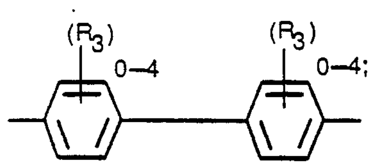

worin $R_3$ wie vorstehend definiert ist;

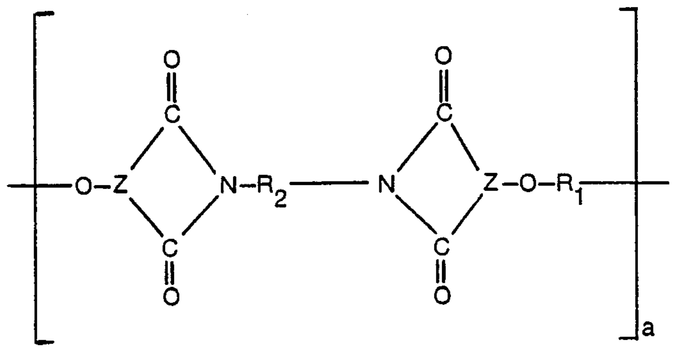

(II)

worin —O—Z ausgewählt ist unter

(a) 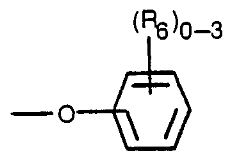

worin $R_6$ unabhängig Wasserstoff, nieder-Alkyl oder nieder-Alkoxy ist;

(b) 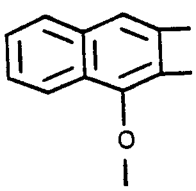 und (c) 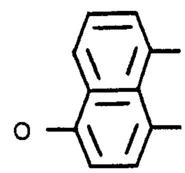

worin $R_1$ und $R_2$ und a wie oben definiert sind.

2. Zusammensetzung nach Anspruch 1, worin das Poly(etherimid) wiederkehrende Einheiten der folgenden Formel hat:

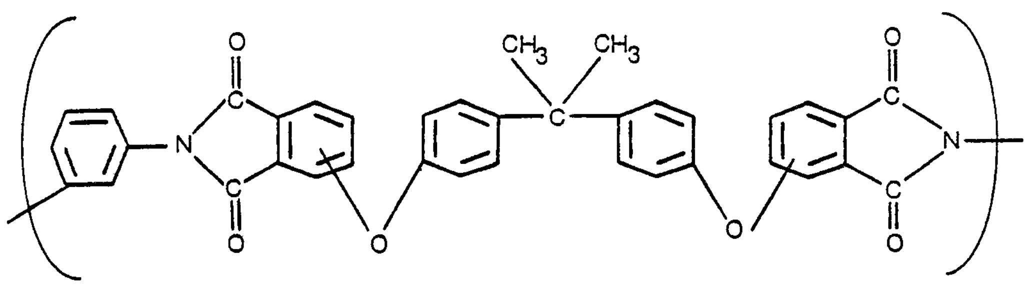

3. Zusammensetzung nach den Ansprüchen 1 oder 2, worin das Polyamid ausgewählt ist unter einem oder mehreren der folgenden: Nylon-6,6, Nylon-6, Nylon-3, Nylon-4, Nylon-7, Nylon-8, Nylon-9, Nylon-10, Nylon-11, Nylon-6,T und Nylon-6,10.

4. Zusammensetzung nach irgendeinem der Ansprüche 1 bis 3, worin das kristalline Polyamid-Polymer in Mengen von etwa 5 bis etwa 95 Gew.-% verwendet ist.

5. Zusammensetzung nach irgendeinem der Ansprüche 1 bis 4, worin das Poly(etherimid)-Polymer in Mengen von etwa 5 bis etwa 95 Gew.-% verwendet ist.

6. Zusammensetzung nach irgendeinem der Ansprüche 1 bis 5, welche eine Verstärkungsfaser, z.B. Kohlenstoffasern, Glasfasern und/oder aromatische Polyamidfasern, enthält.

7. Zusammensetzung nach irgendeinem der Ansprüche 1 bis 6, welche einen Mineralfüllstoff, z.B. Calciumcarbonat, Wollastonit und/oder Silicate, enthält.

8. Zusammensetzung nach irgendeinem der Ansprüche 1 bis 7, welche ein thermoplastisches Polymer, z.B. ein Polycarbonat oder ein Poly(estercarbonat), enthält.

**Revendications**

1. Composition apte au moulage, comprenant un polymère du type polyamide cristallin et un polymère du type poly(éther-imide) de formules (I) ou (II) suivantes:

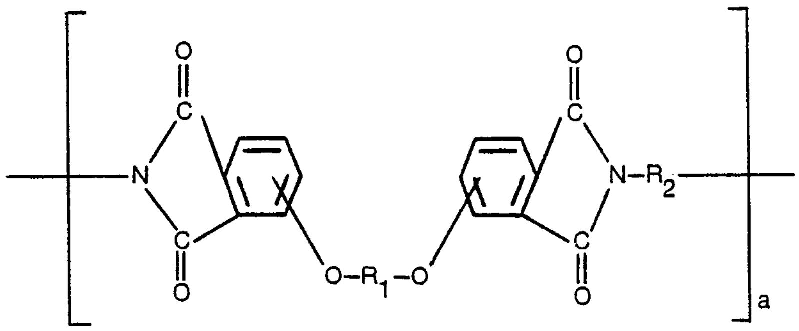

(I)

où a est un nombre entier supérieur à 1, —O—$R_1$—O— est attaché en positions 3 ou 4 et 3′ ou 4′ et $R_1$ est choisi entre (a) un radical aromatique substitué ou non substitué de formule:

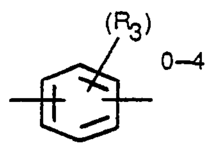

,

ou

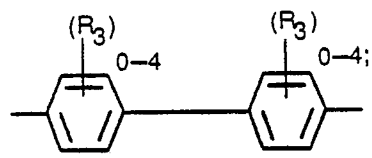

(b) un radical divalent de formule:

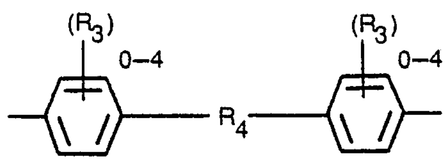

où les symboles $R_3$, identiques ou différents, représentent un groupe alkyle en $C_1$ à $C_6$, ou un halogène et $R_4$ est choisi entre —O—, —S—,

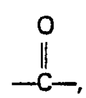

—SO—, —$SO_2$—, un groupe alkylène de 1 à 6 atomes de carbone, cycloalkylène de 4 à 8 atomes de carbone, alkylidène de 1 à 6 atomes de carbone ou cycloalkylidène de 4 à 8 atomes de carbone, $R_2$ est choisi entre un radical d'hydrocarbure aromatique ayant 6 à 20 atomes de carbone et ses dérivés halogénés, ou ses dérivés à substituant alkyle, dont le groupe alkyle contient 1 à 6 atomes de carbone, des radicaux alkylène ou cycloalkylène ayant 2 à 20 atomes de carbone, un polydiorganosiloxane à terminaison alkylène en $C_2$ à $C_8$ et un radical divalent de formule

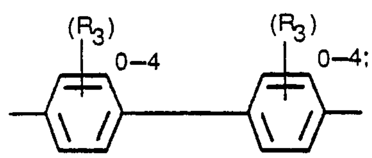

dans laquelle $R_3$ a la définition donnée ci-dessus;

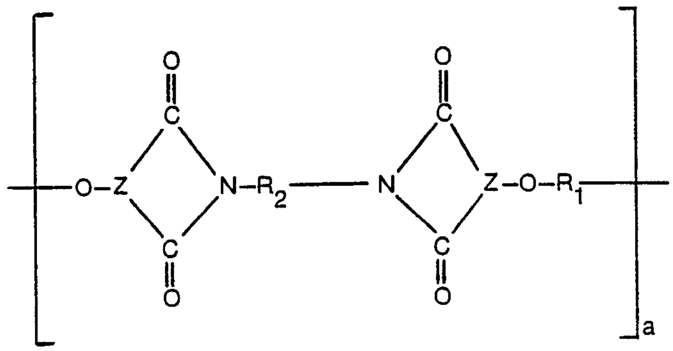

(II)

où —O—Z est choisi entre

(a) 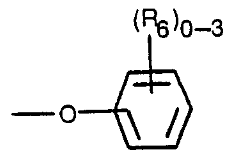

où les symboles $R_6$ identiques ou différents représentent l'hydrogène, un groupe alkyle inférieur ou un groupe alkoxy inférieur,

(b) 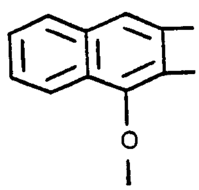 et (c) 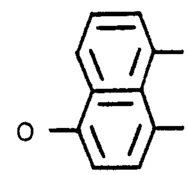

où $R_1$ et $R_2$ et a sont tels que définis ci-dessus.

2. Composition suivant la revendication 1, dans laquelle le poly(éther-imide) porte des motifs répétés de formule suivante:

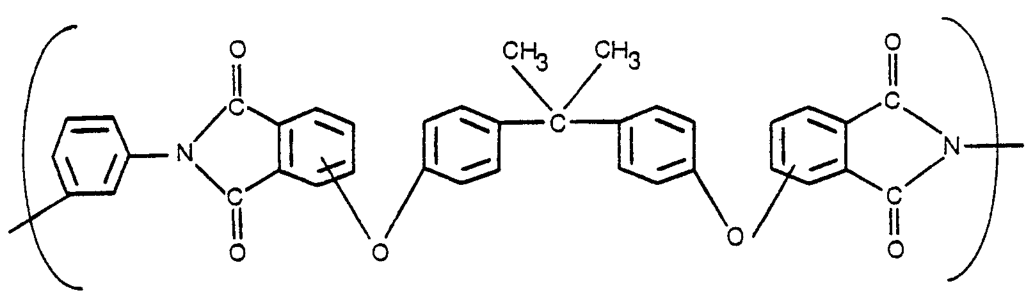

3. Composition suivant les revendications 1 ou 2, dans laquelle le polyamide est un ou plusieurs des produits suivants: Nylon-6,6, Nylon-6, Nylon-3, Nylon-4, Nylon-7, Nylon-8, Nylon-9, Nylon-10, Nylon-11, Nylon-6,T, et Nylon-6,10.

4. Composition suivant l'une quelconque des revendications 1 à 3, dans laquelle le polymère du type polyamide cristallin est utilisé en quantités d'environ 5 à environ 95 pourcent en poids.

5. Composition suivant l'une quelconque des revendications 1 à 4, dans laquelle le polymère du type poly(éther-imide) est utilisé en quantités d'environ 5 à environ 95 pourcent en poids.

6. Composition suivant l'une quelconque des revendications 1 à 5, qui contient un fibre de renforcement telle que des fibres de carbone, du verre en fibre et/our des fibres de polyamides aromatiques.

7. Composition suivant l'une quelconque des revendications 1 à 6, qui contient une charge minérale telle que du carbonate de calcium, de la wolloastonite et/ou des silicates.

8. Composition suivant l'une quelconque des revendications 1 à 7, qui contient un polymère thermoplastique, par exemple un polycarbonate ou un poly(estercarbonate).